# EUROPEAN PATENT APPLICATION

(11) **EP 4 528 537 A1**
(43) Date of publication of application: **26.03.2025**
(21) Application number: 24162984.9
(22) Date of filing: 12.03.2024
(51) Int. Cl.: G06F 16/332

(54) **INFORMATION PROCESSING APPARATUS, INFORMATION PROCESSING METHOD, AND COMPUTER PROGRAM**

(30) Priority: 19.09.2023 JP 2023151708
(71) Applicant: Kabushiki Kaisha Toshiba, Minato-ku Tokyo (JP)
(72) Inventor: IWAMASA, Mikito, Tokyo (JP)
(74) Representative: Marks & Clerk LLP

(57) **Abstract**

According to one approach, an information processing apparatus comprising a processor configured to: select, based on a content of an input question, a database corresponding to the question among a plurality of databases respectively storing different kinds of data; generate a prompt to be input to a language model based on the selected database and the question; and generate an answer based on the prompt and the language model.

## Description

### FIELD

The present approach relates to an information processing apparatus, an information processing method, and a computer program.

### BACKGROUND

A system that answers a question in a natural language by using a large language model (LLM) has been increasingly utilized. In a system using an LLM, an answer is output from the LLM by inputting a sentence (question) written in a natural language to the LLM. A document that is input to the LLM is called a prompt. By using the LLM, a user can alleviate the burden of searching for answers or easily acquire unfamiliar knowledge. For the user to make determination by using an output from the LLM, the accuracy of the output content from the LLM may be critical. The content of an answer often lacks accuracy in a case where a question by the user is complicated or has a vague content, in particular.

### BRIEF DESCRIPTION OF THE DRAWINGS

FIG. 1 is a block diagram of an example of an information processing apparatus according to an approach;
FIG. 2 is a diagram illustrating an example of a user question and a plurality of partial questions generated from the user question;
FIG. 3 is a diagram illustrating an example of a DB switch rule;
FIG. 4 is a diagram illustrating an example of a sentence template;
FIG. 5 is a diagram illustrating an example of a prompt produced based on the sentence template in FIG. 4;
FIG. 6 is a diagram illustrating an example of graphs displayed by an output device;
FIG. 7 is a flowchart illustrating an example of processing according to an approach; and

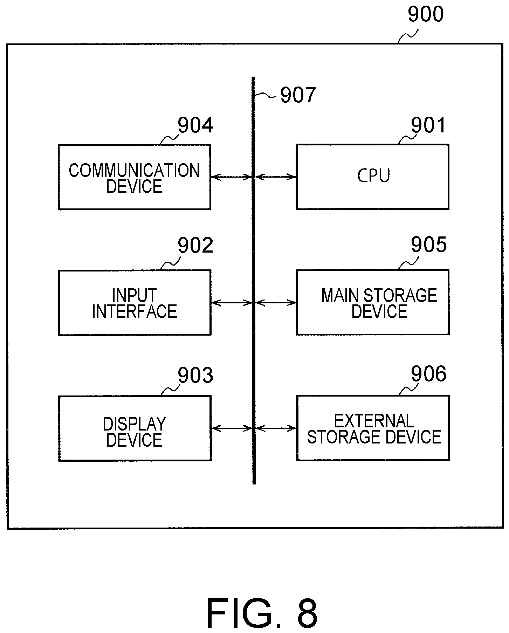

FIG. 8 is a diagram illustrating a hardware configuration of an information processing apparatus according to an approach.

### DETAILED DESCRIPTION

According to one approach, an information processing apparatus comprising a processor configured to: select, based on a content of an input question, a database corresponding to the question among a plurality of databases respectively storing different kinds of data; generate a prompt to be input to a language model based on the selected database and the question; and generate an answer based on the prompt and the language model.

An approach will be described below with reference to the accompanying drawings.

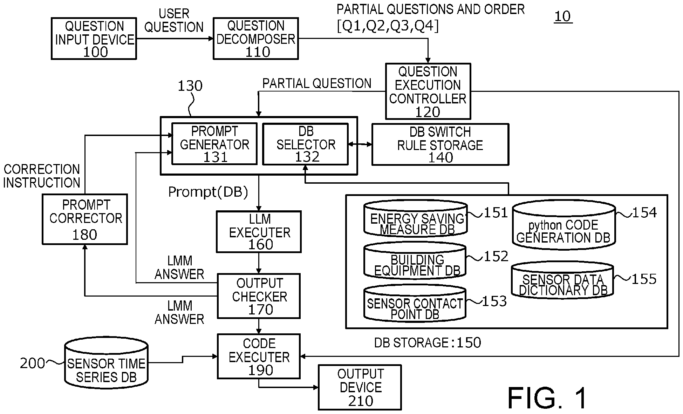

FIG. 1 is a block diagram of an example of an information processing apparatus 10 according to the present approach.

The information processing apparatus 10 in FIG. 1 includes a question input device 100, a question decomposer 110, a question execution controller 120, a prompt processor 130, a DB switch rule storage 140, a DB storage 150, a large language model (LLM) executer 160, an output checker 170, a prompt corrector 180, a code executer 190, a sensor time series DB 200, and an output device 210.

A processing circuitry or a processor according to the present approach has at least one or a plurality of optional functions of the question decomposer 110, the question execution controller 120, the prompt processor 130, the LLM executer 160, the output checker 170, the prompt corrector 180, and the code executer 190. An LLM is used as a language model in the present approach, but any other language model than the LLM which is capable of handling and understanding a natural language may be used.

The DB storage 150 includes an energy saving measure DB 151, a building equipment DB 152, and a sensor contact point DB 153.

The prompt processor 130 includes a prompt generator 131 and a DB selector 132.

The question input device 100 accepts an input of a question from a user. The screen of an application according to the present approach is displayed for the user so that the user can input a question through a question input field of the application. The question is input in a natural language. The language may be Japanese, English, Chinese, Korean, French, or the like. The user can input the question by using, for example, a keyboard, a voice input device, or a mouse. The question input device 100 sends data of the question input by the user to the question decomposer 110. The data to be sent to the question decomposer 110 may be text data, encrypted data, or data in any other format.

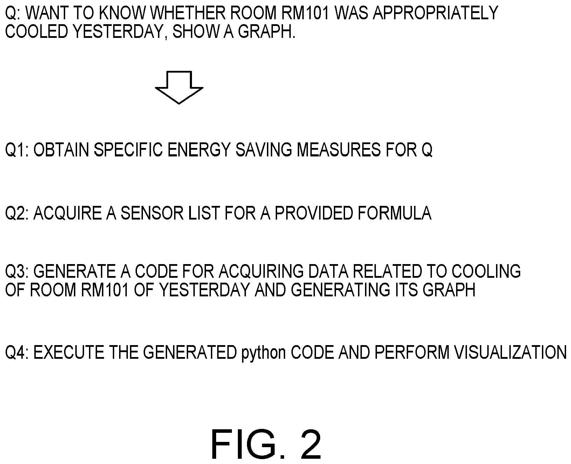

The upper part of FIG. 2 illustrates an example of a question input by the user. The string "Q:" means that a content written after "Q:" is a question input by the user. The question input by the user is "want to know whether Room RM101 was appropriately cooled yesterday, show it in a graph.".

The user is an administrator of a facility such as a building and wants to know whether a room (named RM101) in the facility is appropriately cooled. It is assumed that the user expects the present apparatus to provide knowledge of appropriate cooling to the user on a premise that the knowledge is held as a database at the present apparatus or stored in a server accessible from the present apparatus.

The question decomposer 110 disassembles a user question into a plurality of partial questions to obtain an appropriate answer to the user question. Specifically, the question decomposer 110 converts the user question into a series of a plurality of partial questions by using a method such as search and obtains a list (partial question list) including the plurality of partial questions and the order of the plurality of partial questions. The question decomposer 110 sends the partial question list to the question execution controller 120. Each partial question has a more specific content than the user question, and an answer to a partial question that is early in the order can be used to find an answer to the next or subsequent partial question. Even when the user question is a complicated question or a vague question, an answer that the user is looking for can be accurately obtained by disassembling the user question into a plurality of specific partial questions as described above. For example, an existing technology such as planning can be used as a specific method. The planning is, for example, a technology of planning partial questions and an order of the partial questions to correctly answer the user question. A natural language understanding artificial intelligence (AI) program called SHRDLU may be used as such a technology. The user question is not disassembled when not needed. "Procedures as a Representation for Data in a Computer Program for Understanding Natural Language", Terry Winograd, MIT AI Technical Report 235, February 1971 is known as a reference literature of SHRDLU.

The lower part of FIG. 2 illustrates a partial question list generated from the question in the upper part of FIG. 2. Four partial questions Q1 to Q4 are illustrated and are in the order of the partial questions Q1 to Q4. As illustrated:
the first partial question Q1 is "obtain specific energy saving measures for Q";
the second partial question Q2 is "acquire a sensor list for a provided formula";
the third partial question Q3 is "generate a code for acquiring data related to cooling of Room RM101 of yesterday and generating its graph"; and
the fourth partial question Q4 is "execute the generated python code and visualize its result".

In the partial question Q1, "Q" represents a user question Q.

The question execution controller 120 performs control to sequentially execute the plurality of partial questions in the partial question list. First, the question execution controller 120 takes out the first partial question in the partial question list and sends the first partial question to the prompt processor 130 in a case where the first partial question is a problem to be processed by the LLM executer 160. When processing of the first partial question is completed (an answer to the first partial question is obtained) through processing at the prompt processor 130 or later, the next partial question is taken out of the partial question listc and sent to the prompt processor 130. Subsequently, the same processing is repeatedly performed until the last partial question in the partial question list is processed. In a case where a partial question thus taken out is a question that requests the code executer 190 to execute a code, an instruction based on the partial question is sent to the code executer 190. In the present approach, it is assumed that the last partial question is a question that requests the code executer 190 to execute a code.

When having received a partial question from the question execution controller 120, the prompt processor 130 generates a prompt to be input to the LLM executer 160. The prompt processor 130 includes the prompt generator 131 and the DB selector 132.

The DB selector 132 selects a database (DB) to be used for the prompt generation based on a switch rule (DB switch rule) stored in the DB switch rule storage 140. DB candidates used for the prompt generation are DBs stored in the DB storage 150 and are specifically the energy saving measure DB 151, the building equipment DB 152, the sensor contact point DB 153, a python code generation DB 154, a sensor data dictionary DB 155, and the like. Any other DB than the illustrated DBs may be stored in the DB storage 150. The DB switch rule and the DBs 151 to 155 or the like will be described below.

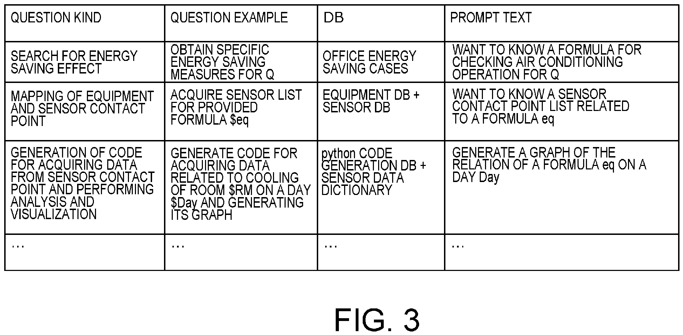

FIG. 3 illustrates an example of the DB switch rule stored in the DB switch rule storage 140. The DB switch rule is a table including the columns of "question kind", "question example", "DB", and "prompt text". However, the DB switch rule may be in any other format than a table format, such as a list format.

The column of "question kind" stores information indicating a question kind. In the illustrated example, question kinds are written in a natural language that is easily understandable by a human, but information such as IDs or numbers may be stored as long as question kinds can be identified.

The column of "question example" stores exemplary description of a question (partial question). Although only one exemplary question is stored in association for each question kind in the illustrated example, a large number or a plurality of exemplary questions may be stored for each question kind.

The column of "DB" stores information that identifies a DB to be used among various DBs stored in the DB storage 150. Specifically, "office energy saving cases" corresponds to the energy saving measure DB 151, "equipment DB + sensor DB" corresponds to the building equipment DB 152 and the sensor contact point DB 153, and "python code generation DB + sensor data dictionary" corresponds to the python code generation DB 154 and the sensor data dictionary DB 155.

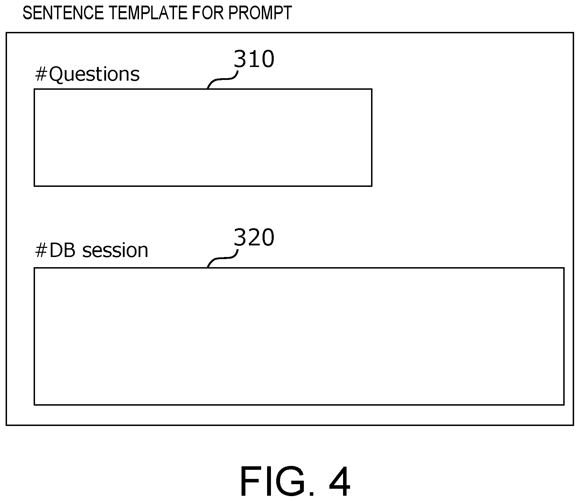

The column of "prompt text" stores a prompt body (natural language) embedded in a sentence template (refer to FIG. 4 to be described later) for prompt production. The prompt body may be embedded in the sentence template as is or may be partially edited and embedded in the sentence template.

For example, "want to know a formula for checking air conditioning operation for Q" is stored as a prompt text in association with the value of "question example", which is "obtain specific energy saving measures for question Q". Note that "Q " is the above-described question (refer to FIG. 2) input from the user. The value of "prompt text" may be stored in association with the value of "question kind".

The energy saving measure DB 151 is a DB in which a large number of cases of energy saving in a facility are stored. Energy saving targets are various devices such as an air conditioner, an elevator, an illumination instrument, and an office automation (AO) instrument. As for an air conditioner, for example, a large number of cases are written such as what formula is to be used to evaluate air conditioning efficiency, what data (sensor) is needed to calculate the formula, and what output from the formula is appropriate. Classifications may be set in accordance with a building property, a room property, an air conditioner property, and the like, and these cases may be stored for each classification. The cases may be collected as actual cases proven to be effective when executed by countries, local governments, and various companies. Such a large number of cases may be written in a natural language. The energy saving measure DB 151 may be various energy saving cases published on the Internet by various organizations and companies and downloaded. The energy saving measure DB 151 is an example of a database related to the kind of a state monitored by a sensor provided at a facility. In a case where the user desires to monitor a state other than an energy saving state, a database related to the kind of the state to be monitored may be provided.

The building equipment DB 152 stores data related to equipment at a facility such as a building. For example, property information such as the name and position of a building, and property information such as the positions of rooms, elevators, and the like in the building are stored. In addition, property information of the installation positions, functions, and the like of air conditioners, illumination instruments, AO instruments, and the like (for example, rooms where they are disposed) in the building is stored. The building equipment DB 152 may be in a table format or may be a document on which data related to these facilities and equipment is written in a natural language. The building equipment DB 152 is an example of a database related to equipment provided at a facility.

The sensor contact point DB 153 stores, for each of a plurality of sensors, information of a facility where the sensor is provided, its installation place (such as a room) in the facility, the kind of the sensor, an instrument that controls the sensor, an instrument that uses an output from the sensor, and the like in association with the identification information (sensor name or ID) of the sensor. The kinds of a sensor include, for example, a temperature sensor, a humidity sensor, a proximity sensor, a displacement sensor, and a pressure sensor. The sensor contact point DB 153 is an example of a database related to a sensor provided at a facility.

The python code generation DB 154 stores commands, grammars, and the like of python. Code templates of typical processing may be stored. These kinds of data can be used to automatically generate a python program.

To use data (value) of a sensor as a variable in a computer program of python or the like, the sensor data dictionary DB 155 stores information of the kind (for example, waveform data or discrete value) of the sensor data, definition (data type, the number of digits) of a variable representing the sensor, and the like. In addition, information of a method of processing the sensor data (for example, how to acquire the sensor value in a case where the data is a waveform (for example, whether to use the maximum value in a constant duration)) may be stored. These kinds of information may be written for each kind of the sensors or may be written for each sensor identification information (sensor name or ID) used in the sensor contact point DB 153. The sensor data dictionary DB 155 is an example of a database related to a sensor provided at a facility.

The DB selector 132 acquires, from the DB switch rule, a value of "DB" and a value of "prompt text" that match the partial question received from the question execution controller 120. More specifically, the DB selector 132 compares the partial question with the column of "question example" in the DB switch rule, specifies a most similar value of "question example", and acquires the value of "DB" and the value of "prompt text" in a row including the specified value. The DB selector 132 selects, from the DB storage 150, a DB identified by the acquired value of "DB".

For example, in a case where the partial question is "obtain specific energy saving measures for Q", the partial question most matches (is most similar to) "obtain specific energy saving measures for question Q", and thus "office energy saving cases" is acquired as the value of "DB", and "want to know a formula for checking air conditioning operation for Q" is acquired as the value of "prompt text". Thus, the DB selector 132 selects the energy saving measure DB 151 corresponding to "office energy saving cases". In the following description, the value of "prompt text" acquired by the DB selector 132 is written as a prompt text without "".

Vector matching may be used to specify a value of "question example" that most matches the partial question. In this case, the partial question is vectorized, the value of "question example" is vectorized, the similarity (for example, Euclidean distance) between both vectors is calculated, and a value having the highest similarity among values of "question example" is selected. The vectorization may be numerical vectorization by morphological analysis of the partial question. Similarly, the value of "question example" may be numerically vectorized to calculate the similarity (distance) between vectors. The vectorization may be performed by any other method than a method using morpheme analysis, such as a method using embedded processing with a neural network.

The prompt generator 131 generates a prompt to be provided to the LLM executer 160 based on the DB (referred to as a selected DB) selected by the DB selector 132 and the prompt text acquired by the DB selector 132. The prompt generator 131 holds a sentence template and generates the prompt by embedding the acquired prompt text in the sentence template and also embedding data of the selected DB as context information. In this case, data related to the partial question is extracted from the selected DB as the embedded data of the selected DB, and the extracted data is embedded in the sentence template. Accordingly, when the prompt is processed by the LLM executer 160, the range of processed data can be narrowed down to an appropriate range and thus a highly accurate answer is highly likely to be obtained. As a modification, a link to the selected DB may be embedded in the sentence template. Moreover, all contents of the DB may be embedded in the sentence template if the size of the DB is not too large.

For example, in a case where the partial question is "Q1: obtain specific energy saving measures for Q" and the selected DB is the energy saving measure DB 151, the user question Q has a content related to cooling and thus only data related to cooling efficiency is extracted from the energy saving measure DB 151.

FIG. 4 illustrates an example of the sentence template. A field 310 denoted by "#Questions" is a field in which the prompt text is stored. A field 320 denoted by "#DB session" is a field in which related data extracted from the selected DB is stored.

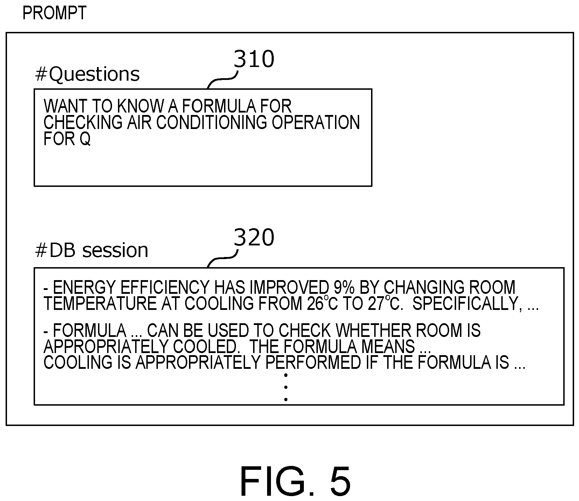

FIG. 5 illustrates an example of a prompt produced by storing the prompt text acquired in a case where the partial question is "Q1: obtain specific energy saving measures for Q" in the field 310 of the sentence template and storing the related data extracted from the selected DB (energy saving measure DB 151) in the field 320.

The prompt generator 131 sends the generated prompt to the LLM executer 160. In the diagram, the generated prompt is expressed as "Prompt (DB)". The expression of "Prompt (DB)" schematically means a prompt in which data of the selected DB is embedded as context information.

The LLM executer 160 is a circuit or processor having functions of an LLM. The LLM is an AI model trained by using a large number of data sets (text data) and generates and outputs an answer to an input question. The answer is output in various formats, and for example, may be a sentence including a natural language or may include a code (program code) such as python, which is executable by an appropriate python execution engine. For example, Chat GPT, Bing, Bard, and Notion AI are widely known as examples of the LLM.

The LLM executer 160 performs processing (LLM processing) for obtaining an answer to a prompt text (question stored in the field 310) included in the prompt received from the prompt generator 131. In this case, related data of the selected DB, which is embedded as context information in the field 320 is used. The LLM executer 160 sends the generated answer to the output checker 170.

The output checker 170 checks whether the answer received from the LLM executer 160 is consistent (or inconsistent) with the partial question (or prompt text) based on which the answer is generated. For example, if the answer content is energy saving measures related to air conditioning in general (including heating) instead of cooling, the output checker 170 determines that the answer content is inconsistent with the partial question, and sends the current answer to the prompt corrector 180. The next partial question may be considered to determine the consistency of the answer content. In this case, the output checker 170 may check the content of the next partial question to the question execution controller 120.

The prompt corrector 180 generates a correction instruction based on the answer received from the output checker 170 and sends the correction instruction to the prompt generator 131. For example, in a case where the content of the answer is not limited to cooling, the prompt corrector 180 instructs the prompt generator 131 to add, to the prompt text, a description clearly indicating that the answer is to be narrowed down to cooling. Alternatively, in a case where the next partial question needs a formula for energy saving evaluation but the answer does not include the formula, the prompt corrector 180 instructs the prompt generator 131 to correct the prompt text to indicate that the formula is to be included in the answer. The prompt corrector 180 may display at least one of the content of the answer and an inconsistent part of the answer to the user through the output device 210 or another display device. In this case, the prompt corrector 180 may accept a correction instruction from the user and send the correction instruction to the prompt generator 131.

When having received the correction instruction from the prompt corrector 180, the prompt generator 131 corrects the prompt (for example, corrects the prompt text, corrects the related data extracted from the selected DB, or corrects both) in accordance with the correction instruction and sends the corrected prompt to the LLM executer 160. The LLM executer 160 generates an answer based on the corrected prompt, the output checker 170 checks whether there is a problem with the answer. In a case where there is a problem, the same processing as described above is repeated.

In a case where there is no problem with the answer from the LLM executer 160, the output checker 170 instructs the prompt processor 130 to proceed to the next partial question. In this case, the current answer is fed back to the prompt processor 130 or the prompt generator 131. Having received the instruction, the prompt processor 130 instructs the question execution controller 120 to feed the next partial question and acquires the next partial question.

When having received the second partial question, the prompt processor 130 generates a prompt by using the DB selector 132 and the prompt generator 131 and sends the generated prompt to the LLM executer 160 in the same manner for the first partial question. In this case, the prompt generator 131 generates a prompt onto which feedback of the previous LLM output result (answer) is reflected. The LLM executer 160 generates an answer to a prompt text included in the prompt based on related data of the selected DB or the like and sends the answer to the output checker 170. The output checker 170 checks whether there is a problem with the answer (LLM answer). In a case where there is a problem, similarly to the case of the first partial question, the output checker 170 causes the prompt generator 131 to generate a prompt again through the prompt corrector 180. In a case where there is no problem, the output checker 170 instructs the prompt processor 130 to proceed to the next partial question. The prompt processor 130 instructs the question execution controller 120 to feed the next partial question if any.

The last partial question is not a question that asks the LLM executer 160 for an answer but is a question that requests code execution and execution result visualization to the code executer 190. Thus, the question execution controller 120 instructs the code executer 190 to execute a code (code obtained as an answer to the third partial question) and visualize an output result of the code execution. In a case where the last partial question does not include a request for code execution but only includes a request for visualization of the previous partial question (in the present example, the third partial question), the question execution controller 120 may instruct the code executer 190 or the output device 210 to visualize the previous partial question.

The code executer 190 executes the code (in the present example, code obtained as an answer to the third partial question) instructed by the question execution controller 120. The code executer 190 includes an engine that executes codes. In the code execution, in a case where the code includes an instruction to perform processing using time series data of a sensor (for example, an instruction to produce a graph using time series data of the sensor), the code executer 190 specifies the identification information (ID) of the sensor in the code and reads time series data of the sensor from the sensor time series DB 200 based on the ID. In the sensor time series DB 200, time series data of each of a plurality of sensors is stored in association with the identification information of the sensor. The code executer 190 performs processing by using the read time series data of the sensor and sends a result of the processing to the output device 210. The output device 210 displays the result of the processing received from the code executer 190 on a screen in a visually recognizable manner by the user. The output device 210 is a display device such as a liquid crystal display device or an organic EL display device. The output device 210 may include a wired or wireless communicator. In this case, the output device 210 may transmit the result of the processing to a terminal device operated by the user and cause the terminal device to output the result of the processing.

A specific example of operation of the present apparatus will be described below based on the above-described case where the partial questions Q1 to Q4 are obtained from the user question Q illustrated in FIG. 2. An example in which an answer to the user question Q is generated by sequentially executing the partial questions Q1 to Q4 will be described.

### [1] DB selector 132 and prompt generator 131

Since the first partial question of "Q1: obtain specific energy saving measures for Q" matches "obtain specific energy saving measures for question Q" in the DB switch rule, the energy saving measure DB 151 corresponding to "office energy saving cases" is selected by the DB selector 132 and the prompt text of "want to know a formula for checking air conditioning operation for Q" is acquired. The prompt generator 131 generates a prompt by inserting the prompt text into the field 310 of the sentence template and adding related data of the partial question, which is extracted from the energy saving measure DB 151, to the field 320 of the sentence template as context information.

### [2] LLM executer 160

The LLM executer 160 executes the prompt generated by the prompt generator 131 and obtains, as an answer to the first partial question, "A1: whether formula 1 = (RM101 room temperature T1 - set temperature T1set) is inversely proportional to (air conditioning outlet temperature T2 - room temperature T1)". Note that "A1" is identification information that identifies the answer.

### [3] Output checker 170

The output checker 170 checks the answer A1, determines that there is no problem, and instructs the prompt processor 130 to proceed to the next partial question. The answer A1 is fed back to the prompt generator 131.

### [4] Question execution controller 120

The next partial question (second partial question) of "Q2: acquire a sensor list for a provided formula" is sent to the prompt processor 130.

### [5] DB selector 132 and prompt generator 131

Since the second partial question of "Q2: acquire a sensor list for a provided formula" matches "acquire a sensor list for a provided formula $eq" in the DB switch rule, the building equipment DB 152 and the sensor contact point DB 153 corresponding to "equipment DB + sensor DB" are selected and the prompt text of "want to know a sensor contact point list related to a formula eq" is acquired. The sensor contact point list corresponds to a list of sensor identification information expressed by one or a plurality of variables included in the formula.

### [6] Prompt generator 131

The prompt text of "want to know a sensor contact point list related to a formula $eq", which is selected by the DB selector 132 is updated to "want to know a sensor contact point list related to a formula 1" by replacing "formula $eq" in the prompt text with "formula 1" based on the prompt text and the previous output of the answer A1 from the LLM executer 160. The string "$eq" is an example of a variable included in the prompt text. For example, a value included in an answer to the previous or earlier partial question is assigned to the variable. Accordingly, a prompt onto which the answer to the previous partial question is reflected can be generated (a prompt text for the next partial question can be generated). The method for the reflection of the answer to the previous partial question is not limited to the method through the variable. For example, the answer to the previous partial question may be added to a prompt text selected for the next partial question as is.

The prompt generator 131 generates a prompt by inserting the updated prompt text into the field 310 of the sentence template and adding related data of the updated prompt text (or the second partial question), which is extracted from the building equipment DB 152 and the sensor contact point DB 153, to the field 320 as context information.

The content of the formula 1, "whether (RM101 room temperature T1 - set temperature T1set) is inversely proportional to (air conditioning outlet temperature T2 - room temperature T1)" may be directly embedded in "formula 1" in the updated prompt text to generate the prompt text of "want to know a sensor contact point list related to "whether (RM101 room temperature T1 - set temperature T1set) is inversely proportional to (air conditioning outlet temperature T2 - room temperature T1)"".

### [7] LLM executer 160

The LLM executer 160 executes the prompt generated by the prompt generator 131 and obtains "A2: T1 = T001, T1set = 27, T2 = T004" as an answer to the second partial question. Note that "A2" is identification information that identifies the answer. The answer means that, for example, T001 can be used as sensor identification information (sensor contact point) to acquire sensor data of the room temperature T1.

### [8] Output checker 170

The output checker 170 checks the answer A2, determines that there is no problem, and instructs the prompt processor 130 to proceed to the next partial question. The answer A2 is fed back to the prompt generator 131.

### [9] Question execution controller 120

The next partial question (third partial question) of "Q3: generate a code for acquiring data related to cooling of Room RM101 of yesterday and generating its graph" is sent to the prompt processor 130.

### [10] DB selector 132 and prompt generator 131

The partial question of "Q3: generate a code for acquiring data related to cooling of Room RM101 of yesterday and generates its graph" matches "generate a code acquiring data related to cooling of room $RM on a day $Day and generates its graph" in the DB switch rule. Thus, the python code generation DB 154 and the sensor data dictionary DB 155 corresponding to "python code generation DB + sensor data dictionary" are selected and the prompt text of "generate a graph of the relation of a formula $eq on a day $Day" is acquired.

### [11] Prompt generator 131

The previous and earlier outputs of the answers A1 and A2 from the LLM are reflected onto "generate a graph of the relation of a formula $eq on a day $Day" to generate the prompt text of "generate a graph of the relation of (T001 - 27) and (T004 - T001) of yesterday". The prompt generator 131 generates a prompt by inserting the generated prompt text into the field 310 of the sentence template and adding related data of the generated prompt text (or the third partial question), which is extracted from the python code generation DB 154 and the sensor data dictionary DB 155, to the field 320 as context information. The strings "$Day" and "$eq" are examples of a variable included in the prompt text. For example, a value included in an answer to the previous or earlier partial question is assigned to the variable.

### [12] LLM executer 160

The LLM executer 160 executes the prompt generated by the prompt generator 131 and obtains "A3: python code for acquiring data and drawing a graph" as an answer to the third partial question. Although simplified in this example, "python code" in reality is a program code string in a format that is executable by the code executer 190. Note that "A3" is identification information that identifies the answer.

### [13] Output checker 170

Since the answer A3 includes the program code, the output checker 170 passes the answer A3 to the code executer 190. Alternatively, the output checker 170 may receive an output instruction of the answer A3 from the question execution controller 120 and may output the answer A3 to the code executer 190 in accordance with the output instruction.

### [14] Code executer 190

When the last partial question of "Q4: execute and visualize the generated python code" is executed by the question execution controller 120, an instruction to execute and visualize the python code is sent to the code executer 190. In accordance with the instruction, the code executer 190 executes the python code (program code) included in the answer A3 received from the output checker 170, thereby drawing a graph. Time series data of a sensor, which is necessary for drawing the graph, is acquired from the sensor time series DB 200 based on the identification information of the sensor included in the program code. The code executer 190 passes the graph as a result of the drawing to the output device 210. The output device 210 displays the graph in a way that the graph is visible to the user.

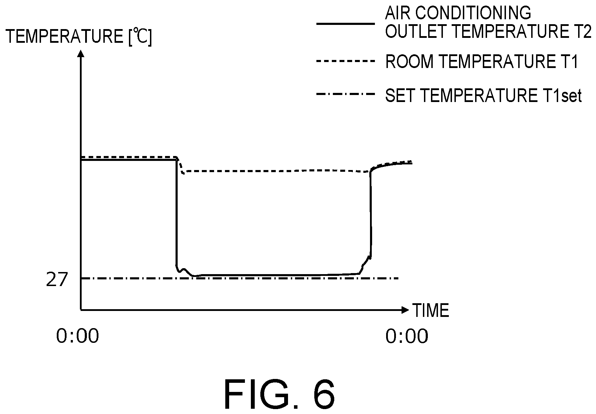

FIG. 6 is an example of graphs displayed by the output device 210. In this example, graphs of the air conditioning outlet temperature T2, the room temperature T1, and the set temperature T1set (= 27°C) are illustrated. The user can determine whether an air conditioner appropriately operates by referring to the graphs. This graph output format is exemplary and may be another output format. For example, a graph of (T001 - 27) and a graph of (T004 - T001) may be calculated and displayed.

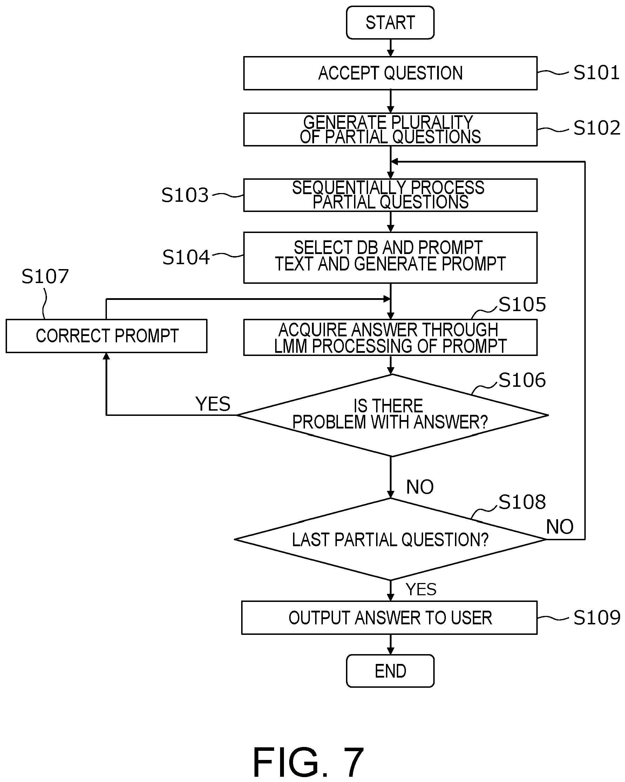

FIG. 7 is a flowchart illustrating an example of processing according to the present approach.

The question input device 100 accepts a question from the user (S101).

The question decomposer 110 generates a plurality of partial questions from the user question and sets an order to the partial questions (S102).

The question execution controller 120 performs control so that processing is sequentially executed from the first partial question (S103).

The DB selector 132 of the prompt processor 130 acquires a target partial question (partial question to be subsequently processed) from the question execution controller 120 and selects a corresponding DB and a corresponding prompt text from the DB switch rule in the DB switch rule storage 140 based on the acquired partial question (S104).

The prompt generator 131 extracts the prompt text or data related to the partial question from the selected DB and generates an LLM prompt by reflecting the extracted data and the selected prompt text onto the sentence template (S104). The selected prompt text may be edited based on answers to the previous and earlier partial questions (or previous and earlier prompts).

The LLM executer 160 executes LLM processing with the generated prompt as an input and generates an answer (S105).

The output checker 170 checks whether there is a problem with the content of the answer (S106), and in a case where there is a problem, the prompt corrector 180 sends a correction instruction based on the content of the answer to the prompt processor 130 or the prompt generator 131 to cause them to correct the prompt (S107). In a case where there is no problem with the content of the answer and the answer is not an answer to the last partial question (S108), the process proceeds to processing of the next partial question (S103).

When having performed processing of the last partial question, the question execution controller 120 causes the output device 210 to display an answer corresponding to the last partial question as an answer to the user question in a way that the answer is visible to the user (S109).

According to the present approach as described above, since a plurality of more specific partial questions are generated from a user question and sequentially processed, a more accurate answer can be obtained.

According to the present approach, since a DB related to a partial question is selected and data of the selected DB is included as context information in an LLM prompt, the LLM executer 160 can obtain a more accurate answer in LLM processing.

According to the present approach, since a prompt text related to a partial question is selected and the selected prompt text (or prompt text edited based on the previous and earlier answers) is added to an LLM prompt for the partial question, a more accurate answer to the partial question can be obtained. Specifically, even when the partial question is not sufficiently correctly written for deriving an accurate answer from the LLM, a more correct answer to the partial question can be expected to be obtained by preparing, as a prompt text in advance, a question in an expression with which an accurate answer is expected to be obtained and by using a corresponding prompt text in place of the partial question. Moreover, the previous answer can be easily reflected onto the next partial question by, for example, including a variable on which a value included in an answer to the previous partial question is reflected, in the prompt text. However, the method of achieving reflection of the answer to the previous partial question onto the next partial question is not limited to a method including a variable. For example, the answer to the previous partial question may be added to a prompt text selected for the next partial question as is.

Some constituent components of the information processing apparatus 10 according to the present approach may be configured by an external server. For example, a server having functions of the LLM executer 160 is disposed on a network such as the Internet. The information processing apparatus 10 may transmit a prompt to the server through the network and receive an answer from the server. In this case, the information processing apparatus 10 includes a communicator configured to communicate with the server. Similarly, a server having functions of the code executer 190 may be prepared so that a python code to be executed is transmitted to the server and an execution result of the code is acquired from the server.

### (Hardware configuration)

FIG. 19 illustrates a hardware configuration of the information processing device according to each approach. The information processing device is configured as a computer device 900. The computer device 900 includes a CPU 901, an input interface 902, a display device 903, a communication device 904, a main storage device 905, and an external storage device 906, and these components are mutually connected through a bus 907.

The CPU (central processing unit) 901 executes an information processing program as a computer program on the main storage device 905. The information processing program is a computer program configured to achieve each above-described functional composition of the present device. The information processing program may be achieved by a combination of a plurality of computer programs and scripts instead of one computer program. Each functional composition is achieved as the CPU 901 executes the information processing program.

The input interface 902 is a circuit for inputting, to the present device, an operation signal from an input device such as a keyboard, a mouse, or a touch panel. The input interface 902 corresponds to the input device in each approach.

The display device 903 displays data output from the present device. The display device 903 is, for example, a liquid crystal display (LCD), an organic electroluminescence display, a cathode-ray tube (CRT), or a plasma display (PDP) but is not limited thereto. Data output from the computer device 900 can be displayed on the display device 903. The display device 903 corresponds to the output device in each approach.

The communication device 904 is a circuit for the present device to communicate with an external device in a wireless or wired manner. Data can be input from the external device through the communication device 904. The data input from the external device can be stored in the main storage device 905 or the external storage device 906.

The main storage device 905 stores, for example, the information processing program, data necessary for execution of the information processing program, and data generated through execution of the information processing program. The information processing program is loaded and executed on the main storage device 905. The main storage device 905 is, for example, a RAM, a DRAM, or an SRAM but is not limited thereto. Each storage or database in the information processing device in each approach may be implemented on the main storage device 905.

The external storage device 906 stores, for example, the information processing program, data necessary for execution of the information processing program, and data generated through execution of the information processing program. The information processing program and the data are read onto the main storage device 905 at execution of the information processing program. The external storage device 906 is, for example, a hard disk, an optical disk, a flash memory, or a magnetic tape but is not limited thereto. Each storage or database in the information processing device in each approach may be implemented on the external storage device 906.

The information processing program may be installed on the computer device 900 in advance or may be stored in a storage medium such as a CD-ROM. Moreover, the information processing program in each approach may be uploaded on the Internet.

The present device may be configured as a single computer device 900 or may be configured as a system including a plurality of mutually connected computer devices 900.

While certain arrangements have been described, these arrangements have been presented by way of example only, and are not intended to limit the scope of the inventions. Indeed, the apparatuses* described herein may be embodied in a variety of other forms; furthermore various omissions, substitutions and changes in the form of the apparatuses described herein may be made.

The approaches as described before may be configured as below.

### (Clauses)

Clause 1. An information processing apparatus comprising a processing circuitry configured to:
select, based on a content of an input question, a database corresponding to the question among a plurality of databases respectively storing different kinds of data;
generate a prompt to be input to a language model based on the selected database and the question; and
generate an answer based on the prompt and the language model.

Clause 2. The information processing apparatus according to clause 1, wherein the processing circuitry specifies a question matching the input question based on a switch rule associating the plurality of databases with a plurality of questions and selects a database corresponding to the specified question.

Clause 3. The information processing apparatus according to clause 2, wherein the processing circuitry
performs, based on the question, generation of a plurality of partial questions and determination of an order of the plurality of partial questions,
selects a first partial question among the plurality of partial questions in accordance with the order and selects a first database based on a content of the first partial question,
generates a first prompt to be input to the language model based on the first database and the first partial question and generates an answer to the first partial question based on the first prompt and the language model, and
selects a second partial question among the plurality of partial questions in accordance with the order, selects a second database based on a content of the second partial question, and generates a second prompt to be input to the language model based on the second database, the second partial question, and the answer to the first partial question.

Clause 4. The information processing apparatus according to clause 3, wherein
the switch rule associates the plurality of questions with a plurality of prompt texts for producing a question to be included in the prompt,
the processing circuitry selects a first prompt text from the switch rule based on the content of the first partial question and generates the first prompt based on the first database and the first prompt text, and
the processing circuitry selects a second prompt text from the switch rule based on the content of the second partial question and generates the second prompt based on the second database, the second prompt text, and the answer to the first partial question.

Clause 5. The information processing apparatus according to clause 4, wherein
a variable is included in the second prompt text,
the second prompt text is updated by assigning, to the variable, a value included in the answer to the first partial question, and
the second prompt is generated based on the updated second prompt text and the second database.

Clause 6. The information processing apparatus according to any one of clauses 1 to 5, wherein
the processing circuitry determines whether the generated answer is consistent with the prompt or the question based on which the answer is generated, and
in a case where the consistency is not obtained, the processing circuitry corrects the prompt based on an inconsistent part of the answer and regenerates an answer based on the corrected prompt and the language model.

Clause 7. The information processing apparatus according to any one of clauses 1 to 6, wherein
the processing circuitry determines whether the generated answer is consistent with the prompt or the question based on which the answer is generated, and
in a case where the consistency is not obtained, the processing circuitry presents an inconsistent part of the answer and the answer to a user, receives a correction instruction for the prompt from the user, corrects the prompt based on the correction instruction, and regenerates an answer based on the corrected prompt and the language model.

Clause 8. The information processing apparatus according to any one of clauses 1 to 7, wherein the processing circuitry extracts data related to the question from data stored in the selected database and generates the prompt based on the extracted data and the question.

Clause 9. The information processing apparatus according to clause 8, wherein the prompt is generated by storing the question in a first field of a sentence template for prompt generation and storing the extracted data in a second field of the sentence template, the sentence template including the first field in which the question is to be stored and the second field in which data from the database is to be stored.

Clause 10. The information processing apparatus according to any one of clauses 1 to 9, further comprising a code executer configured to execute a program code in a case where the program code is included in the answer.

Clause 11. The information processing apparatus according to clause 10, wherein in a case where the program code includes a variable representing a sensor and a command for executing processing based on a value of the variable, the code executer reads data of the sensor from a time series database storing time series data of the sensor, assigns the read data to the variable, executes the command, and outputs a result of the processing.

Clause 12. The information processing apparatus according to clause 11, wherein
the command is a command for generating a graph based on data of the variable, and
the code executer outputs the graph as the result of the processing.

Clause 13. The information processing apparatus according to clause 11 or 12, wherein
the input question is a question input from a user, and
the information processing apparatus further comprises an output device configured to display the result of the processing in a way that the result is visible to the user.

Clause 14. The information processing apparatus according to any one of clauses 1 to 13, further comprising a language model executer configured to execute the language model, wherein
the processing circuitry acquires the answer from the language model executer by inputting the prompt to the language model executer.

Clause 15. The information processing apparatus according to clause 14, wherein the language model is a large language model.

Clause 16. The information processing apparatus according to any one of clauses 1 to 15, wherein
the question is a question related to a state of a facility in which a plurality of sensors are disposed and the state of which is monitored by the sensors, and
the plurality of databases include at least a database related to a kind of the monitored state, a database related to equipment included in the facility, and a database related to the sensors.

Clause 17. The information processing apparatus according to any one of clause 3 to 5, wherein the processing circuitry performs the generation of the plurality of partial questions and the determination of the order of the plurality of partial questions by applying, to the question, a planning algorithm that plans partial questions and an order of the partial questions to obtain a correct answer to the question.

Clause 18. The information processing apparatus according to clause 17, further comprising a question input device configured to accept an input of the question from a user through a screen of an application, wherein
the processing circuitry performs the generation of the plurality of partial questions and the determination of the order of the plurality of partial questions for the question received by the question input device.

Clause 19. An information processing method comprising:
selecting, based on a content of an input question, a database corresponding to the question among a plurality of databases respectively storing different kinds of data;
generating a prompt to be input to a language model based on the selected database and the question; and
generating an answer based on the prompt and the language model.

Clause 20. A computer program which causes a computer to perform processes comprising:
selecting, based on a content of an input question, a database corresponding to the question among a plurality of databases respectively storing different kinds of data;
generating a prompt to be input to a language model based on the selected database and the question; and
generating an answer based on the prompt and the language model.

## Claims

1. An information processing apparatus comprising a processor configured to:
select, based on a content of an input question, a database corresponding to the question among a plurality of databases respectively storing different kinds of data;
generate a prompt to be input to a language model based on the selected database and the question; and
generate an answer based on the prompt and the language model.

2. The information processing apparatus according to claim 1, wherein the processor specifies a question matching the input question based on a switch rule associating the plurality of databases with a plurality of questions and selects a database corresponding to the specified question.

3. The information processing apparatus according to claim 2, wherein the processor
performs, based on the question, generation of a plurality of partial questions and determination of an order of the plurality of partial questions,
selects a first partial question among the plurality of partial questions in accordance with the order and selects a first database based on a content of the first partial question,
generates a first prompt to be input to the language model based on the first database and the first partial question and generates an answer to the first partial question based on the first prompt and the language model, and
selects a second partial question among the plurality of partial questions in accordance with the order, selects a second database based on a content of the second partial question, and generates a second prompt to be input to the language model based on the second database, the second partial question, and the answer to the first partial question.

4. The information processing apparatus according to claim 3, wherein
the switch rule associates the plurality of questions with a plurality of prompt texts for producing a question to be included in the prompt,
the processor selects a first prompt text from the switch rule based on the content of the first partial question and generates the first prompt based on the first database and the first prompt text, and
the processor selects a second prompt text from the switch rule based on the content of the second partial question and generates the second prompt based on the second database, the second prompt text, and the answer to the first partial question.

5. The information processing apparatus according to claim 4, wherein
a variable is included in the second prompt text,
the second prompt text is updated by assigning, to the variable, a value included in the answer to the first partial question, and
the second prompt is generated based on the updated second prompt text and the second database.

6. The information processing apparatus according to any one of claims 1 to 5, wherein
the processor determines whether the generated answer is consistent with the prompt or the question based on which the answer is generated, and
in a case where the consistency is not obtained, the processor corrects the prompt based on an inconsistent part of the answer and regenerates an answer based on the corrected prompt and the language model.

7. The information processing apparatus according to any one of claims 1 to 6, wherein
the processor determines whether the generated answer is consistent with the prompt or the question based on which the answer is generated, and
in a case where the consistency is not obtained, the processor presents an inconsistent part of the answer and the answer to a user, receives a correction instruction for the prompt from the user, corrects the prompt based on the correction instruction, and regenerates an answer based on the corrected prompt and the language model.

8. The information processing apparatus according to any one of claims 1 to 7, wherein the processor extracts data related to the question from data stored in the selected database and generates the prompt based on the extracted data and the question.

9. The information processing apparatus according to claim 8, wherein the prompt is generated by storing the question in a first field of a sentence template for prompt generation and storing the extracted data in a second field of the sentence template, the sentence template including the first field in which the question is to be stored and the second field in which data from the database is to be stored.

10. The information processing apparatus according to any one of claims 1 to 9, further comprising a code executer configured to execute a program code in a case where the program code is included in the answer.

11. The information processing apparatus according to claim 10, wherein in a case where the program code includes a variable representing a sensor and a command for executing processing based on a value of the variable, the code executer reads data of the sensor from a time series database storing time series data of the sensor, assigns the read data to the variable, executes the command, and outputs a result of the processing.

12. The information processing apparatus according to claim 11, wherein
the command is a command for generating a graph based on data of the variable, and
the code executer outputs the graph as the result of the processing.

13. The information processing apparatus according to claim 11 or 12, wherein
the input question is a question input from a user, and
the information processing apparatus further comprises an output device configured to display the result of the processing in a way that the result is visible to the user.

14. The information processing apparatus according to any one of claims 1 to 13, further comprising a language model executer configured to execute the language model, wherein
the processor acquires the answer from the language model executer by inputting the prompt to the language model executer.

15. The information processing apparatus according to claim 14, wherein the language model is a large language model.

16. The information processing apparatus according to any one of claims 1 to 15, wherein
the question is a question related to a state of a facility in which a plurality of sensors are disposed and the state of which is monitored by the sensors, and
the plurality of databases include at least a database related to a kind of the monitored state, a database related to equipment included in the facility, and a database related to the sensors.

17. The information processing apparatus according to any one of claims 3 to 5, wherein the processor performs the generation of the plurality of partial questions and the determination of the order of the plurality of partial questions by applying, to the question, a planning algorithm that plans partial questions and an order of the partial questions to obtain a correct answer to the question.

18. The information processing apparatus according to claim 17, further comprising a question input device configured to accept an input of the question from a user through a screen of an application, wherein
the processor performs the generation of the plurality of partial questions and the determination of the order of the plurality of partial questions for the question received by the question input device.

19. An information processing method comprising:
selecting, based on a content of an input question, a database corresponding to the question among a plurality of databases respectively storing different kinds of data;
generating a prompt to be input to a language model based on the selected database and the question; and
generating an answer based on the prompt and the language model.

20. A computer program which causes a computer to perform processes comprising:
selecting, based on a content of an input question, a database corresponding to the question among a plurality of databases respectively storing different kinds of data;
generating a prompt to be input to a language model based on the selected database and the question; and
generating an answer based on the prompt and the language model.
